# EUROPEAN PATENT APPLICATION

(11) **EP 1 591 782 A1**
(43) Date of publication of application: **02.11.2005**
(21) Application number: 05252530.0
(22) Date of filing: 22.04.2005
(51) Int. Cl.: G01N 27/414

(54) **Chemical-sensing devices**

(30) Priority: 30.04.2004 US 837554
(71) Applicant: Hewlett-Packard Development Company, L.P., Houston, Texas 77070 (US)
(72) Inventor: Ward, Kenneth, Corvallis, OR 97330 (US); Kornilovich, Pavel, Corvallis, OR 97330 (US); Peters, Kevin F., Corvallis, OR 97333 (US); Wei, Qingqiao, Corvallis, OR 97330 (US)
(74) Representative: Jackson, Richard Eric

(57) **Abstract**

This disclosure relates to a system 100 having a chemical sensor 106 and either a temperature sensor 102 or an ionic-strength sensor 104 in a same fluidic channel 114. The disclosure also related to a system 100 having a chemical sensor 106 and either a temperature sensor 102 or an ionic-strength sensor 104 over a same substrate 202. This system 100 can be capable of measuring chemical concentrations of two or more chemicals and a temperature or ionic strength of a fluid.

## Description

### TECHNICAL FIELD

This invention relates to chemical-sensing devices.

### BACKGROUND

Typical chemical-sensitive field-effect transistors ("ChemFETs") can selectively detect different chemical species, such as in a liquid or gaseous fluid. Adsorption of a specific chemical causes a change in the electrical conductance of the ChemFET's electrical channel; this change can be related to the presence of the adsorbed chemical.

There are significant problems with typical ChemFETs, however. One major problem is that the ionic strength of a liquid solution can interfere with accurate measurement of a concentration of an analyte (e.g., a chemical specie) that the ChemFET is attempting to measure. This is because the ionic strength of the solution can create a capacitance between a channel of the ChemFET and a reference electrode used with the ChemFET. This capacitance contributes to the ChemFET electrical conductance along with the analyte. Thus, typical ChemFETs measure the analyte and the ionic strength of the solution, but do not accurately differentiate how much of each is being measured.

To help resolve this problem, a second reference electrode and a reference solution can be added. This is not generally practical, however, because it is large, cumbersome, or costly for field use of ChemFET sensors. It can be even more impractical for small ChemFET sensors.

Another significant problem with typical ChemFETs is generated from changes in temperature. Changes in temperature can significantly degrade the accuracy of the typical ChemFET. For example, temperature changes can change the ChemFET electrical conductance or impedance, and thus give rise to inaccurate measurement of an analyte's concentration in the fluid. Temperature changes can also modify ionic conductivity of a liquid solution, which can also affect the current flow through the channel. Further, temperature changes can affect a chemical state of a sensing surface of the typical ChemFET This is because chemical equilibria at the sensing surface can be modified by temperature changes. In this case, the typical ChemFET may give an accurate measurement of the analyte concentration at the sensing surface, but not an accurate measurement of the analyte concentration of the solution as a whole.

Typical ways in which to address the problems associated with temperature and temperature change are to independently measure a temperature of a fluid being measured. These typical ways may not, however, be practical for field use of ChemFETs because they can be large, cumbersome, or costly to use. These problems with using an independent temperature sensor can be exacerbated for small ChemFET sensors.

### BRIEF DESCRIPTION OF THE DRAWINGS

Figure 1 illustrates a top plan view of an exemplary chemical-sensing device.
Figure 2 illustrates a side sectional view of the device of Fig. 1.
Figure 3 illustrates the view of Figure 2 excluding the fluidic channel, and a close-up of part of that view and part of the view of Figure 1, each showing an exemplary ionic-strength sensor.
Figure 4 illustrates part of the view of Figure 1 and a side-sectional close-up of part of an exemplary temperature sensor.
Figure 5 illustrates the view of Figure 2 excluding the fluidic channel, and a close-up of part of that view, a close-up of the view of Figure 1, and a cross-section along a line B to B', each showing part of an exemplary chemical sensor.
Figure 6 illustrates a top plan view of the exemplary chemical-sensing device of Figure 1 with an additional exemplary chemical sensor and an exemplary ionic-strength sensor.

The same numbers are used throughout the disclosure and figures to reference like components and features.

### DETAILED DESCRIPTION

Measuring small concentrations of chemicals using a large or small chemical sensor can be difficult without accurate measurement of temperature and ionic strength. The more accurate the temperature and ionic strength measurement, the more accurately the effects of temperature and ionic strength on a chemical sensor can be calibrated to correct the chemical sensor's response.

These effects are exacerbated for some chemical sensors, such as ChemFETs, which are one type of electrochemical sensor. For example, small ChemFET sensors often allow for more sensitive measurement of small concentrations of chemicals than typical, larger ChemFET sensors. These small ChemFET sensors (e.g., those less than or about one millimeter in size) can suffer, however, from greater sensitivity to temperature changes and ionic strength. Also, use of small ChemFET sensors can make more difficult and less accurate the use of typical manners for measuring temperature and ionic strength (e.g., external sensors). Also, the chemistry of the adsorbed layer, especially at low analyte concentrations, can be particularly sensitive to small changes in temperature and ionic strength, which adds to the measurement difficulty.

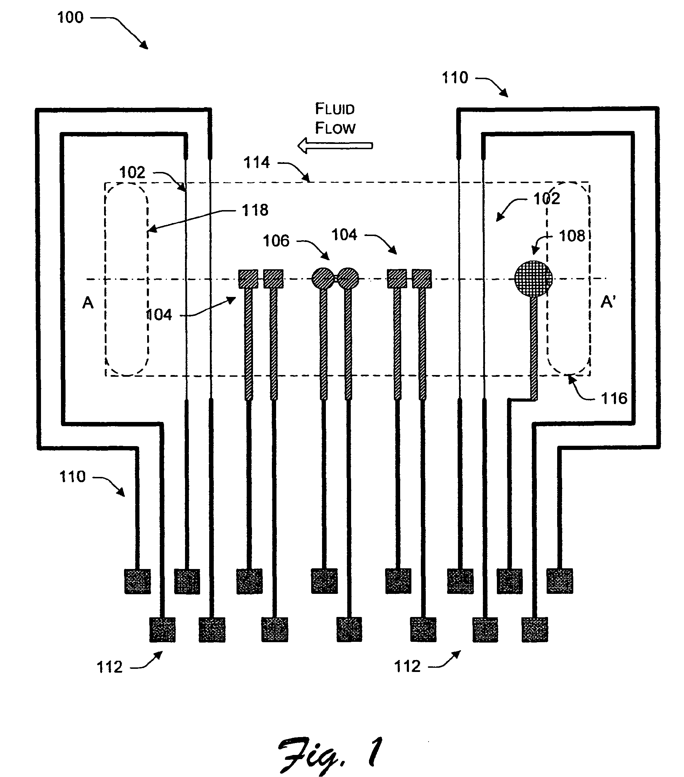

Referring initially to Figure 1, a top plan view of an exemplary chemical-sensing device in accordance with one embodiment is shown generally at 100. Chemical-sensing device 100 comprises sensing elements that include temperature sensors 102, ionic-strength sensors 104, and a chemical sensor 106, as well as a reference electrode 108. Additional reference electrodes can be included in the chemical-sensing device 100, such with an additional reference electrode downstream of the chemical sensor 106 (not shown). Conductive lines 110 electrically connect the temperature sensors 102, the ionic-strength sensors 104, the chemical sensor 106, and the reference electrode 108 to electrical connection pads 112. The electrical connection pads 112 are used to enable communication between the device 100 and other devices, such as an electric or computer analysis system capable of reading, calibrating, analyzing, recording, or communicating a measurement of the sensing elements. The reference electrode 108, the conductive lines 110, and the electrical connection pads 112 comprise conductive or semiconductive materials, such as gold-plated aluminum, platinum, palladium, doped silicon, or others as will be appreciated by the skilled artisan.

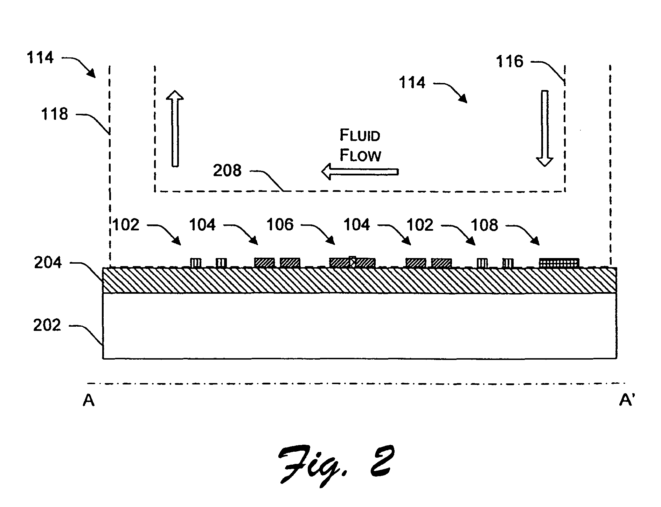

In this illustrated embodiment, the device 100 comprises a fluidic channel 114. The fluidic channel 114 is a physical conduit for flowing a material (e.g. a fluid material like a liquid solution or a gas) across the sensing elements, here from right (upstream) to left (downstream). The fluid can be provided with an inlet tube 116 and an outlet tube 118, another view of which is set forth in Figure 2, described below. In the case of a liquid solution, the reference electrode 108 is used to establish and alter an electric potential of the solution relative to the sensing elements. This electric potential can enable greater accuracy of the chemical sensor 106, due to the constancy of the solution potential relative to the sensor 106. Some types of sensors, such as ChemFETs, include semiconductive materials that are more sensitive to change at certain electric potentials.

In accordance with one embodiment, the device 100 is capable of measuring a certain chemical or class of chemicals at very small concentrations, in part by calibrating the effects of ionic strength and/or temperature on the chemical sensor 106 and the fluid. When measuring small concentrations, even small effects from a temperature or ionic strength change can limit measurement accuracy. In this embodiment, accurate measurement of ionic strength and temperature is aided by placing the temperature sensor 102 and the ionic-strength sensor 104 in close proximity with the chemical sensor 106, such as about ten nanometers to about three millimeters. This proximity enables these sensors 102 and 104 to experience the same or very similar conditions as the chemical sensor 106.

In this embodiment, and as shown in the illustration of Figure 1, the ionic-strength sensors 104 and the temperature sensors 102 are oriented in close fluidic proximity with the chemical sensor 106. In this specific example, two temperature sensors 102 are shown proximate the beginning and end of the fluidic channel 114. With this orientation, a fluid passes over the temperature sensors 102 just before and just after measurement by the chemical sensor 106. This can be especially important in cases where the fluid's temperature changes due to its being flowed through the fluidic channel 114. Likewise, an ionic strength of a solution is measured by the ionic-strength sensors 104 just before and just after measurement by the chemical sensor 106. The information from the temperature sensors 102 and the ionic-strength sensors 104 can aid in accurately determining the actual temperature or ionic strength at the chemical sensor 106. The information can also be used to assess gradients in the ionic strength or temperature in the proximity of the sensor, and for interpolation purposes.

Also in accordance with this embodiment, the ionic-strength sensors 104 and the temperature sensors 102 can be in very close physical proximity with the chemical sensor 106. This proximity can be ten or more nanometers, for instance. The entire fluidic channel 114 can be micro-scale, for instance, such as by being less than ten microns across. In the illustrated embodiment, the temperature sensor 102 and the ionic-strength sensors 104 are about 100 nanometers from the chemical sensor 106. The fluidic channel 114 in this illustrated embodiment can be about 200 nanometers across, measured between the inlet tube 116 and the outlet tube 118. Other dimensions of some embodiments of the device 100 are discussed in greater detail below.

Referring to Figure 2, a cross-sectional view along a line from A to A' of Figure 1 is shown. In the embodiment shown in this cross-section, a single-crystal substrate supports the chemical sensor 106 and multiple temperature sensors 102 and ionic-strength sensors 104. The sensing elements and the reference electrode 108 are shown over a substrate 202 having an insulative layer 204 formed thereover. In the present example, substrate 202 comprises a semiconductive substrate. In the context of this document, the term "semiconductive substrate" is defined as any construction comprising semiconductive material, including, but not limited to, bulk semiconductive materials such as semiconductive wafer or chip and/or semiconductive material layers (both either alone or in assemblies comprising other materials). The term "substrate" refers to any supporting structure, including but not limited to, the semiconductive substrates described above. In this illustrated embodiment of the device 100, the semiconductive substrate 202 comprises lightly doped silicon, such as a doping of about 10¹⁵ cm⁻³. Also, the insulative layer 204 can comprise a dielectric material, such as silicon dioxide. In the illustrated embodiment, the insulative layer 204 is about 200 nanometers thick.

This cross-sectional view also shows the fluidic channel 114. In this embodiment, the fluidic channel 114 directs fluid through the inlet tube 116, over the sensors with a body 208, and out the outlet tube 118. The fluid can be moved with a pump, gravity, or other suitable technique.

In accordance with one embodiment, the device 100 is capable of measuring a certain chemical or class of chemicals and comprises a built-in way in which to counter the effects of ionic strength and/or temperature. The chemical sensor 106, like most ChemFETs, can be affected by a temperature and ionic strength of a fluid. The analyte in the fluid may also be affected by temperature and ionic strength. Because of this, accurate measurement of the fluid's temperature and ionic strength are useful. To aid in calibrating for these effects, the device 100 comprises the temperature sensor 102 and the ionic-strength sensor 104 over the same physical structure, here the semiconductive substrate 202. With the temperature sensor 102 in or over the substrate 202, the temperature sensor 102 is capable of giving an accurate measurement of the temperature proximate to the chemical sensor 106. This structure also enables temperature and ionic-strength measurement for calibration of the chemical sensor 106 in a single structure, potentially reducing a cost, size, and complexity of the device 100.

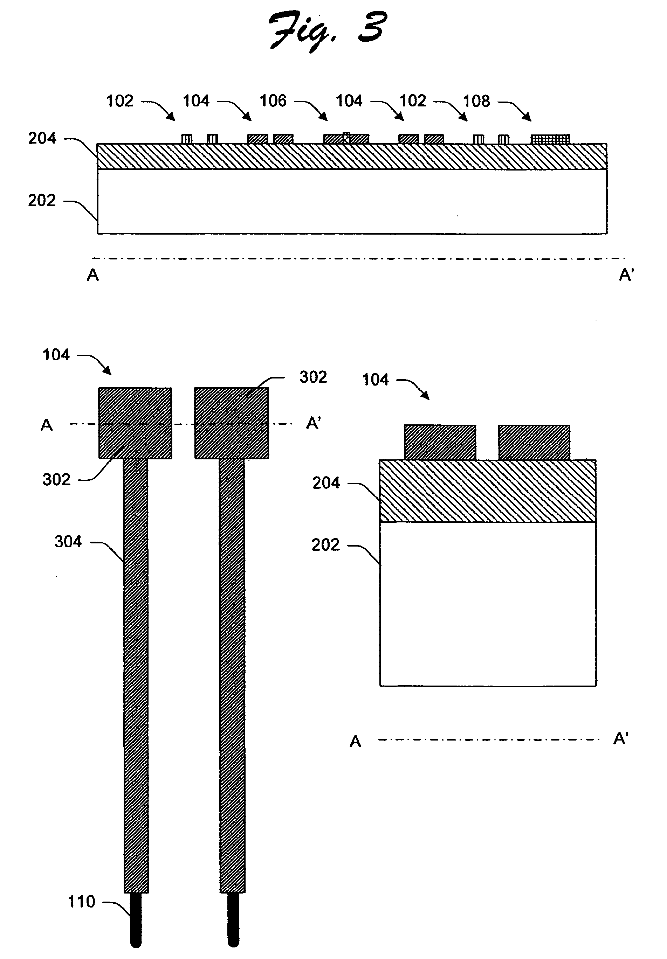

Referring to Figure 3, the cross-sectional view of Figure 2 excluding the fluidic channel 114, with a cross-sectional and top-plan close-up of the ionic-strength sensor 104, is shown. The ionic-strength sensor 104 has termini 302 and elongated bodies 304. The termini 302 can include various semiconductive or conductive materials, such as highly doped silicon or gold, In at least some embodiments, the elongate bodies 304 can reside within the fluidic channel 114, and each electrically connect the termini 302 with the conductive lines 110. Because the elongate bodies 304 and the termini 302 can reside within the fluidic channel 114, each can comprise materials or be coated with a material that is resistant to damage from fluids in the fluidic channel 114.

In one embodiment, the ionic-strength sensor 104 measures ionic strength through measurement of a solution's electrical resistance, capacitance, or impedance. A distance between the two termini 302 of the ionic-strength sensor 104, when a voltage is applied, is usable to measure the solution's ionic strength.

In another embodiment, multiple ionic-strength sensors 104 are used. By using multiple sensors, a more accurate measure of an ionic strength of a portion of the solution being measured by the chemical sensor 106 can be performed. A computer electrically connected to the pads 112 can, for instance, average the ionic strengths measured by the ionic-strength sensors 104. It can then use that average to aid in calibrating a measurement of the chemical sensor 106.

In another embodiment, each of the termini 302 is about eighty nanometers thick and separated by a distance of about forty nanometers. In this embodiment, the distance is useful in measuring the ionic strength through measuring capacitance. Also in this embodiment, the termini 302 and the elongate bodies 304 comprise highly doped silicon, about 10²¹ cm⁻³, which is conductive and also is more chemically resistant to many solutions and gases than some metals.

As can be appreciated by one skilled in the art, the ionic-strength sensors 104 can be multiplied, otherwise oriented, and have other structures usable to measure electrical resistance, capacitance, or impedance of a solution. Additional ionic-strength sensors 104 can be added for a total of two, three, four, or more sensors 104. They can also comprise conductive bodies oriented in various ways, such as some over the substrate 202 and others on a second substrate separated by the flow within the fluidic channel 114 (not shown).

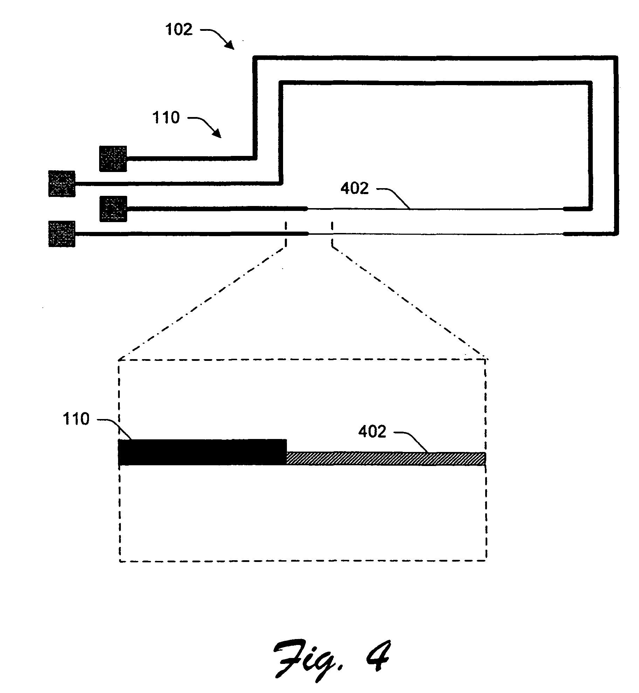

Referring to Figure 4, the top plan view of Figure 1 with close-up views of a cross-sectional part of the temperature sensor 102 is shown. The temperature sensor 102 has a sensing section 402, which is in electrical communication with the conductive lines 110. The sensing section 402 can include various conductors or semiconductors, such as doped silicon. In the embodiment illustrated in Figure 4, the sensing section 402 comprises lightly doped silicon with a conductance less than that of the conductive lines 110. To make the temperature sensor 102 more sensitive to temperature in the fluidic channel 114, the sensing section 402 can be constructed with a substantial TCR (Temperature Coefficient of Resistance). The sensing section 402 can also have a serpentine structure and a zig-zag or switch-back path to increase the effective length of the sensing section 402 within the fluidic channel 114. Increasing the effective length of the sensing section 402 in the manner can also increase its sensitivity to small temperature changes.

In one embodiment, multiple temperature sensors 102 are used. By using multiple temperature sensors 102, a more accurate measure of a temperature of the chemical sensor 106 and the fluid that the chemical sensor 106 is measuring can be performed. A computer electrically connected to the pads 112 can, for instance, average (or interpolate or extrapolate) the temperatures measured by the temperature sensors 102. It can then use that average to calibrate a measurement of the chemical sensor 106.

In another embodiment, the temperature sensor 102 is capable of acting as a heater. In some cases, a chemical sensor (such as the chemical sensor 106) can more accurately measure an analyte's concentration at a certain temperature or analytes can be distinguished from each other at different temperatures. In these cases it can be helpful for the temperature sensor 102 to be used as a resistive heater by passing current through the temperature sensor 102. As shown in Figure 1, many temperature sensors 102 can be oriented near the chemical sensor 106, enabling precise temperature control of the fluid being measured. Further, some of the temperature sensors 102 can be used as heaters while others can be used to measure the fluid's temperature.

As can be appreciated by one skilled in the art, the temperature sensors 102 can be otherwise oriented and have other structures usable to measure (or increase) a fluid's temperature. They can, for instance, be within the insulative layer 204 or beneath the chemical sensor 106.

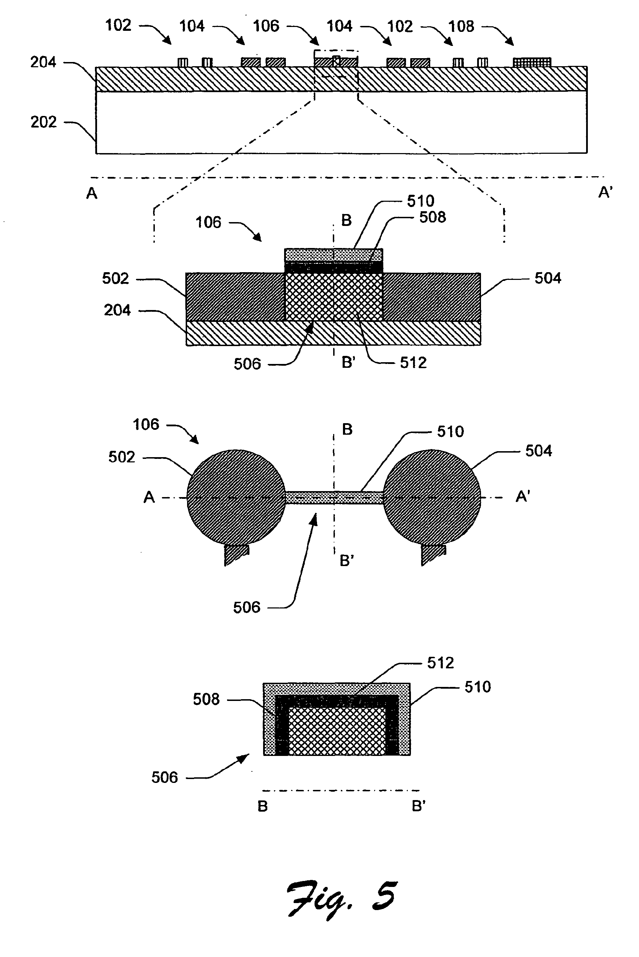

Referring to Figure 5, the cross-sectional view of Figure 2 excluding the fluidic channel 114 with three close-up views is shown. The first is a close-up of the chemical sensor 106 along the view of Figure 2. The second is a close-up of a top plan view of the chemical sensor 106. The third is a close-up of the chemical sensor 106 along a line B to B'. The chemical sensor 106 has a source region 502 and a drain region 504 of semiconductive or conductive materials, such as highly doped silicon of about 10²¹ cm⁻³. Between the source 502 and drain 504 resides an electrical channel region 506. This electrical channel region 506 comprises a semiconductive material, such as lighter doped silicon of about 10¹⁶ to 10¹⁹ cm⁻³. The electrical channel region 506 comprises an insulative layer 508, a molecular probe layer 510, and an electrical channel 512. The insulative layer 508 acts to electrically insulate the electrical channel 512 from an electrochemically charged surface, such as a charged surface of the probe layer 510. It can comprise a material that is resistive to chemical attack as well as being electrically insulative, such as silicon dioxide and/or silicon nitride. The probe layer 510 exposed to the fluid is chemically selective and interacts with specific analytes, discussed in greater detail below.

In one embodiment, shown in part of the first view, the source region 502, the drain region 504, and the electrical channel 512 are nanoscale in thickness and can be about eighty nanometers thick. This small thickness for the electrical channel 512 can aid in sensitive measurement of an analyte due to the electrical channel 512 having a large portion being sensitive to the charged surface of the probe layer 510. Also in this embodiment, the insulative layer 508 is very thin, about three nanometers or less. This thinness can aid in the electrical channel 512 being sensitive to a smaller charge on the probe layer 510, and thus measure a smaller analyte concentration.

In another embodiment, shown in part in the second view, the electrical channel 512 has a small width of about fifty nanometers. This small width can aid in the electrical channel region 506 being sensitive to small concentrations of an analyte in the solution or gas. The insulative layer 508 and/or the probe layer 510 can be over the source region 502 and the drain region 504 in addition to the electrical channel 512.

In the third view showing the cross section along B to B', the cross sectional view of the electrical channel region 506 is shown. This view shows one embodiment where the insulative layer 508 and the probe layer 510 surround the electrical channel 512. This surrounding structure can aid in sensitivity of the electrical channel 512 to the analyte concentration. This structure acts to gather a charge around the electrical channel 512, improving sensitivity of the electrical channel region 506 versus an electrical channel region having a smaller charged-surface-area to gate cross-sectional-area ratio.

In this embodiment, the probe layer 510 is about one to two nanometers in thickness and comprises a silane coupling agent chemically bonded to the insulative layer 508 and bonded to a chemically sensitive and selective layer, such as DNA. The small thickness of the probe layer can aid in sensitivity of the electrical channel region 506 by placing the charged area due to the analyte on the probe layer 510 in close proximity to the electrical channel 512.

The probe layer 510 includes a molecular probe that adheres to particular chemicals or classes of chemicals. In a medical and biological context, the probe layer 510 can be used to measure concentration of a particular protein or nucleotide molecule in a solution of human blood or other biological fluid. If the particular protein is a breast-cancer indicator, for instance, this chemical-sensitive device 100, with an appropriate molecular probe that attracts this breast-cancer indicator, can be used to measure a concentration of this protein in a person's blood. Since this concentration can be very low, a typical sensor may not be able to detect it or detect it accurately. The chemical-sensing device 100 can be used to aid in accurate detection of disease, as well as other uses.

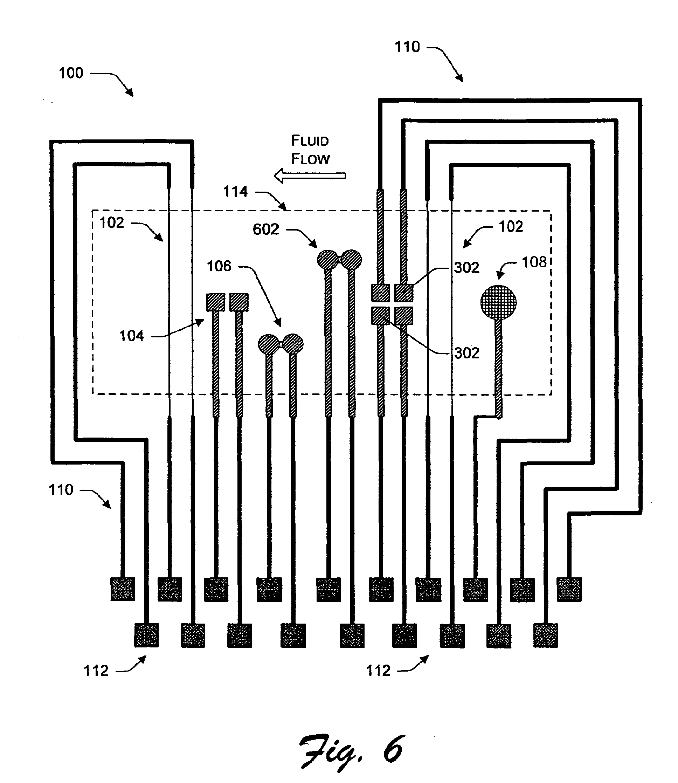

Referring to Figure 6, the chemical-sensing device 100 of Figure 1 having a second chemical sensor 602 and another embodiment of the ionic-strength sensor 104 are shown. This embodiment of the ionic-strength sensor 104 has a four-termini structure (marked as the termini 302). This embodiment also shows that multiple chemical sensors, such as the sensors 106 and 602, can be used. In a similar manner, a one-, two-, or three-dimensional array of many chemical sensors can also be used.

For redundancy and improved precision, some of the chemical sensors can be sensitive to the same chemicals using the same probe chemistry in their probe layers 510. For completeness, some of the chemical sensors can be chemically sensitive to different chemicals or classes of chemicals through the use of different embodiments of the probe layer 510. By so structuring the device 100, two, ten, or even thousands of chemicals can be measured. This can aid in analyzing fluid materials (e.g., liquid or gas materials) quickly and with a high degree of completeness by using many differently sensitive sensors and/or precision by using many similarly sensitive sensors. This and related embodiments can also provide measurements for multiple chemicals with one pass of a fluid through the fluidic channel 114, thereby potentially reducing contamination of or change to the fluid and/or an amount of the fluid needed to measure multiple analytes.

Although the invention is described in language specific to structural features and methodological steps, it is to be understood that the invention defined in the appended claims is not necessarily limited to the specific features or steps described. Rather, the specific features and steps disclosed represent preferred forms of implementing the claimed invention.

## Claims

1. A system comprising:
a micro-scale fluidic channel 114;
an electrochemical sensor 106 oriented in the fluidic channel 114; and
one or more of a temperature sensor 102 or an ionic-strength sensor 104 oriented in the fluidic channel 114.

2. The system of claim 1, wherein the one or more sensors 102 or 104 comprise at least one temperature sensor 102 and at least one ionic-strength sensor 104.

3. The system of claim 1, oriented over a single substrate 202.

4. The system of claim 1, wherein at least one of a same one or more sensors 102 or 104 is disposed within about 100 nanometers of the electrochemical sensor 106.

5. The system of claim 1, wherein the electrochemical sensor 106 comprises a chemical-sensitive field effect transistor.

6. The system of claim 5, wherein the electrochemical sensor 106 comprises an electrical channel 512 and a probe layer 510, the probe layer 510 overlaying the electrical channel 512 such that an electrochemically chargeable surface of the probe layer 510 is within about ten nanometers of a surface of the electrical channel 512.

7. The system of claim 1, further comprising a second electrochemical sensor 602.

8. A method of identifying a property of a bodily fluid, comprising:
(a) providing a fluidic channel 114 including at least one ChemFET 106 and a temperature sensor 102;
(b) passing the bodily fluid through the fluidic channel 114;
(c) while performing act (b) detennining the response of the ChemFET 106;
(d) while performing act (b) using the temperature sensor 102 to sense the temperature of the bodily fluid in the vicinity of the ChemFET 106; and
(e) identifying a property of the bodily fluid using the determined response of the ChemFET 106 and the sensed temperature.

9. The method of claim 8, wherein the property is a concentration of an analyte and the bodily fluid is blood..

10. The method of claim 9, wherein the analyte comprises a disease indicator in the blood.

11. The method of claim 8, wherein the fluidic channel 114 further comprises an ionic-strength sensor 104 and the method further comprises:
(f) while performing act (b), measuring the ionic strength of the bodily fluid using the ionic-strength sensor 104; and
wherein act (e) is performed by also using the measured ionic strength.

12. The method of claim 11, wherein the temperature sensor 102 and the ionic-strength sensor 104 are each located within 100 nanometers of the ChemFET sensor 106.
